# EUROPEAN PATENT SPECIFICATION

(11) **EP 3 366 724 B1**
(45) Date of publication and mention of the grant of the patent: **03.06.2020**
(21) Application number: 16857158.6
(22) Date of filing: 12.08.2016
(51) Int. Cl.: C08L 69/00, C08K 9/04, C08L 83/10

(54) **POLYCARBONATE RESIN COMPOSITION**
POLYCARBONATHARZZUSAMMENSETZUNG
COMPOSITION DE RÉSINE DE POLYCARBONATE

(30) Priority: 20.10.2015 JP 2015206236
(43) Date of publication of application: 29.08.2018
(73) Proprietor: Asahi Fiber Glass Co., Ltd., Tokyo 101-0045 (JP)
(72) Inventor: TOJO Chihiro, Tokyo 101-0045 (JP); ZHAO Peng, Tokyo 101-0045 (JP)
(74) Representative: Gulde & Partner
(86) International application number: PCT/JP2016/073730
(87) International publication number: WO 2017/068840

(56) References cited:
- JP-A- S6 088 062
- JP-A- H09 302 242
- JP-A- S63 162 756
- JP-A- 2014 136 749
- JP-A- 2015 089 893
- US-A1- 2009 186 207
- DATABASE WPI Week 200651 Thomson Scientific, London, GB; AN 2006-496713 XP002790588, -& JP 2006 176612 A (MITSUBISHI ENG-PLASTICS CORP) 6 July 2006 (2006-07-06)

## Description

### Technical Field

The present invention relates to a polycarbonate resin composition. More specifically, the present invention relates to a polycarbonate resin composition which makes it possible to provide a formed article improved in rigidity (especially, bending strength) and appearance, while retaining excellent impact strength.

### Background Art

Formed articles produced from polycarbonate resin compositions (hereinafter, also simply referred to as "formed articles") are excellent in impact strength and design characteristics, and hence have been widely used as materials for various industries (for example, enclosures and the like of electric home appliances, communications devices, computers, and the like).

Because of such a wide variety of uses, various attempts have been made to improve the physical properties of the formed articles.

For example, it is known that a reinforcing material (for example, glass fibers), or a filler (for example, an inorganic filler) is added to a polycarbonate resin composition to improve the elastic modulus of a formed article.

Meanwhile, it is known that the addition of glass fibers to a polycarbonate resin composition results in deterioration in appearance of a formed article (JP 2014-136749 A).

It is also known that the addition of glass fibers results in decrease in impact strength of a formed article.

On the other hand, it is known that addition of an elastomer to a polycarbonate resin composition results in improvement in impact strength of a formed article.

JP 2006-176612 A discloses a polycarbonate resin composition for mobile telephone cases having high impact strength and excellent surface appearance. The composition comprises a polycarbonate resin, glass fibers, a condensed phosphoric acid ester, a multilayer-structure polymer (e.g. a core-shell polymer comprising a core of polyorganosiloxane and a shell of alkyl (meth)acrylate), and polytetrafluoroethylene.

### Summary of Invention

### Technical Problems

The present inventors added an elastomer to a glass fiber-containing polycarbonate resin composition to improve the impact strength of a formed article, and have found that the addition causes a problem of deterioration in appearance of the formed article because of formation of flow marks and floating-up of the glass fibers on the surface of the formed article (especially, an injection-molded article) due to an uneven distribution of the elastomer and the glass fibers.

### Solution to Problems

To solve the above-described problem, the present inventors have conducted intensive studies, and consequently found that when glass fibers of a specific type and an elastomer of a specific type are added to a polycarbonate resin at a specific blending ratio, it is possible to produce a formed article which is improved in rigidity and appearance, while retaining excellent impact strength. Based on this finding, the present inventors have completed the present invention.

Specifically, the present invention relates to the following 1 to 8.
1. A polycarbonate resin composition, consisting of:
   a polycarbonate resin;
   glass fibers subjected to a surface treatment with a sizing agent; and
   an elastomer, wherein
   the glass fibers have a mass-average fiber diameter of 4 to 15 µm and a mass-average fiber length of 60 to 350 µm,
   the elastomer is a dimethyl polysiloxane rubber onto which an acrylic resin is grafted,
   the mass ratio between the polycarbonate resin and the glass fibers (the polycarbonate resin:the glass fibers) is 80 to 95:5 to 20, and
   the mass ratio between the elastomer and the glass fibers (the elastomer/the glass fibers) is 0.10 to 0.30.
2. The polycarbonate resin composition according to the above-described 1, wherein
   the sizing agent is a bisphenol A-type epoxy resin.
3. The polycarbonate resin composition according to the above-described 2, wherein
   the bisphenol A-type epoxy resin has an epoxy equivalent weight of 450 to 5000 g/eq.
4. The polycarbonate resin composition according to any one of the above-described 1 to 3, wherein
   the elastomer comprises the acrylic resin at a ratio of 10 to 40% by mass relative to the total mass of the elastomer.
5. The polycarbonate resin composition according to any one of the above-described 1 to 4, wherein
   the elastomer is particulate, and has a primary particle size of 0.1 to 0.5 µm.
6. The polycarbonate resin composition according to any one of the above-described 1 to 5, which is a resin composition for injection molding.
7. An article obtained by forming the polycarbonate resin composition according to any one of the above-described 1 to 6.
8. The article according to the above-described 7, which is an injection-molded article.

### Advantageous Effects of Invention

As described in Examples later, the polycarbonate resin composition of the present invention makes it possible to provide a formed article improved in rigidity (bending strength and bending modulus, especially, bending strength) and in appearance, while retaining excellent impact strength. Accordingly, the present invention makes it possible to provide a formed article having an added value not provided by conventional ones.

### Description of Embodiments

A polycarbonate resin composition of the present invention comprises: a polycarbonate resin; glass fibers subjected to a surface treatment with a sizing agent; and an elastomer, as essential components. Each component is detailed below.

### Polycarbonate Resin

As the polycarbonate resin, a thermoplastic resin containing carbonate bonds (-O-(C=O)-O-) can be used without any particular limitation.

The polycarbonate resin is preferably an aromatic polycarbonate resin which is a thermoplastic resin containing groups derived from an aromatic compound, and the carbonate bonds.

Examples of the aromatic compound include bisphenol A, bisphenol F, bisphenol B, and the like.

A specific example of the aromatic polycarbonate resin may be one obtained by reacting bisphenol A with phosgene (bisphenol A polycarbonate resin).

The viscosity-average molecular weight of the polycarbonate resin is preferably 12000 to 35000, and more preferably 15000 to 25000, from the viewpoint of the formability. The viscosity-average molecular weight can be determined according to JIS K7252.

In the present invention, one polycarbonate resin may be used alone, or multiple polycarbonate resins may be used in combination.

Polycarbonate resins are known substances, and are readily available on the market, or can be prepared. Glass Fibers

As the glass fibers, those which can be blended with the polycarbonate resin can be used without any particular limitation, as long as the mass-average fiber diameter and the mass-average fiber length described later are satisfied.

The mass-average fiber diameter of the glass fibers contained in the polycarbonate resin composition of the present invention is 4 to 15 µm,preferably 7 to 13 µm,and more preferably 7 to 11 µm.When the average fiber diameter is 4 to 15 µm, it is possible to obtain a formed article (especially, an injection-molded article) excellent in appearance and improved in rigidity (especially, bending strength).

The mass-average fiber length of the glass fibers contained in the polycarbonate resin composition of the present invention is 60 to 350 µm, preferably 100 to 300 µm, and more preferably 120 to 300 µm. When the average fiber length is 60 to 350 µm, it is possible to obtain a formed article (especially, an injection-molded article) which retains an excellent impact strength, and simultaneously which is excellent in appearance with a flat and smooth surface having suppressed flow marks of glass fibers formed on the surface of the formed article due to uneven distribution of the glass fibers during forming (especially, during injection molding).

The fiber diameters and the fiber lengths of the glass fibers contained in the polycarbonate resin composition can be determined, for example, from magnified images of glass fibers which are taken out by combusting the polycarbonate resin composition at 550°C to eliminate the resin components from the polycarbonate resin composition. Note that the temperature (550°C) at which the resin components are combusted is lower than the softening temperature (600°C or above) of the glass fibers, and hence exerts no influence on the fiber diameters and the fiber lengths of the glass fibers. In addition, the mass-average fiber diameter and the mass-average fiber length can be obtained by, for example, measuring the fiber diameters and fiber lengths of 200 or more fibers extracted at random from the glass fibers taken out, and calculating the mass average of the measured values.

Examples of components constituting the glass fibers include silicon dioxide, which is the main component, as well as optional components such as aluminum oxide, calcium oxide, magnesium oxide, and boron oxide.

In the present invention, the amount of the alkali metal oxides (lithium oxide, sodium oxide, potassium oxide, and the like) contained in the glass fibers is preferably 10% by mass or less, and further more preferably 3% by mass or less relative to the total mass of the glass fibers. Glass having such constituents includes E glass and S glass.

The shape of the glass fibers is not particularly limited, as long as the glass fibers can be blended with the polycarbonate resin. The glass fibers are preferably in the shape of milled fibers or chopped strands.

The glass fibers can be obtained by using a conventional known production method. For example, milled fibers can be obtained as follows. Specifically, strands are obtained by a direct-melt method (a method in which glass raw materials are continuously converted into glass in a melting furnace, introduced into a forehearth, and spun by attaching a bushing at a bottom portion of the forehearth), a remelting method (a method in which molten glass is processed into a marble-, cullet-, or rod-like shape, then remelted, and spun), or the like. Then, 500 to 1500 strands are bundled with a sizing agent, and cut to have fiber lengths of 1.5 to 6 mm in length to obtain chopped strands. The chopped strands are pulverized with a hammer mill or a ball mill to obtain the milled fibers.

The glass fibers used in the present invention is subjected to a surface treatment with a sizing agent. The surface treatment results in improvement in interfacial adhesion between the glass fibers and the polycarbonate resin. This makes it possible to improve the rigidity (especially, the bending strength) of a formed article, and suppress the migration and floating-up of the glass fibers to the surface of the formed article (deterioration in appearance of the formed article).

As the sizing agent, a sizing agent applicable to glass fibers can be used without any particular limitation. The sizing agent is preferably an epoxy resin, and more preferably a bisphenol A-type or bisphenol F-type epoxy resin (i.e., an epoxy resin obtained by using bisphenol A or bisphenol F as one of the raw materials).

The epoxy resin used as the sizing agent is preferably free of a curing agent such as an amine compound or an acid anhydride, and in a thermoplastic state on the glass fiber surface.

The epoxy equivalent weight of the epoxy resin is preferably 450 to 5000 g/eq, more preferably 800 to 3600 g/eq, and further preferably 850 to 3000 g/eq.

The epoxy equivalent weight of the epoxy resin can be determined according to JIS K7236.

The epoxy resin used for producing the polycarbonate resin composition is preferably solid at room temperature (25°C) .

Suppose a case where an epoxy resin which has an epoxy equivalent weight of 450 to 5000 g/eq, and is solid at room temperature (especially, a bisphenol A-type or bisphenol F-type epoxy resin) is used as the sizing agent. In such a case, when glass fibers subjected to a surface treatment with the sizing agent and a polycarbonate resin are melt kneaded to produce a polycarbonate resin composition, the sizing agent becomes liquid on the glass fiber surface to further improve the interfacial adhesion between the glass fibers and the polycarbonate resin. When the polycarbonate resin composition is formed into a formed article, the improvement in interfacial adhesion further suppresses the migration and floating-up of the glass fibers to the surface of the formed article. Hence, the appearance of the formed article is further improved. Sizing agents having the above-described physical properties are known substance, and are readily available on the market or can be prepared.

The surface treatment can be conducted by using a conventional method known as a method for performing a surface treatment with a sizing agent on glass fibers without any particular limitation.

The mass ratio between the polycarbonate resin and the glass fibers (the polycarbonate resin:the glass fibers) is 80 to 95:5 to 20, preferably 85 to 95:5 to 15, and more preferably 85 to 90:10 to 15. When the mass ratio between the polycarbonate resin and the glass fiber is 80 to 95:5 to 20, it is possible to obtain a formed article excellent in the balance among the rigidity (especially, bending strength), impact strength, and appearance.

### Elastomer

The elastomer used in the present invention is a dimethyl polysiloxane rubber onto which an acrylic resin is grafted.

The number of repetitions of the repeating unit (C₂H₆OSi) (the degree of polymerization) in the dimethyl polysiloxane, which is the main chain of the elastomer, is, for example, 1,000 to 100,000, preferably 2,000 to 100,000, and more preferably 10,000 to 100,000. When the degree of polymerization is 1,000 to 100,000, flowing and tackiness at room temperature can be suppressed further.

Moreover, to facilitate the grafting of the acrylic resin onto an internal or terminal position of the main chain of the dimethyl polysiloxane rubber, it is preferable that a silane coupling agent (for example, vinyltrialkoxysilane, 3-methacryloxypropyltrialkoxysilane, 3-acryloxypropyltrialkoxysilane, 3-glycidoxypropyltrialkoxysilane, or the like), which polymerizes with an acrylic resin, be bonded to an internal or terminal position of the main chain of the dimethyl polysiloxane rubber.

The acrylic resin grafted onto the main chain may be a homopolymer or a copolymer.

A monomer constituting the acrylic resin may be an acrylic acid ester or a methacrylic acid ester. Specifically, the monomer includes methyl acrylate, methyl methacrylate, ethyl acrylate, ethyl methacrylate, propyl acrylate, propyl methacrylate, butyl acrylate, butyl methacrylate, and the like. Moreover, when the acrylic resin is a copolymer, it is possible to further use a vinyl monomer such as styrene or acrylonitrile in combination.

The degree of polymerization of the monomer constituting the acrylic resin is, for example, 300 to 10,000, preferably 500 to 10,000, and more preferably 500 to 5,000.

The acrylic resin content in the elastomer is preferably 10 to 40 % by mass, and more preferably 20 to 30% by mass relative to the total mass of the elastomer.

Although the present invention is not restricted by a specific theory, the present inventors consider the technical significance of the grafting of the predetermined amount (10 to 40% by mass) of the acrylic resin onto the dimethyl polysiloxane rubber as follows.

Since an ungrafted elastomer (dimethyl polysiloxane rubber alone) does not adhere to a polycarbonate resin, spaces are formed at the interface between the rubber and the resin (fibrils) . The fibrils improve the impact strength of a formed article.

Meanwhile, the fact that the ungrafted elastomer does not adhere to the polycarbonate resin causes various phenomena related to the flowing of the resin composition during forming.

For example, when the dimethyl polysiloxane rubber is unevenly distributed in the resin composition, the flowability of a portion rich in the dimethyl polysiloxane rubber is lower than the flowability of a portion poor in the dimethyl polysiloxane rubber. The unevenness of the flowability causes the formation of flow marks on a formed article and deteriorates the appearance of the formed article.

In contrast, when the predetermined amount of the acrylic resin is grafted onto the dimethyl polysiloxane rubber according to the present invention, adhesion occurs between a portion (the grafted acrylic resin) of the obtained elastomer and the polycarbonate resin. This adhesion results in improvement in compatibility between the elastomer and the polycarbonate. As a result, the uneven distribution of the elastomer in the resin composition is suppressed, so that the formation of flow marks in a formed article is suppressed.

Moreover, the amount of the acrylic resin grafted is limited to the predetermined amount in the present invention. Hence, the portion adhered to the polycarbonate resin is limited to a portion of the elastomer, and fibrils are formed in portions other than the portion of the adhesion.

Accordingly, the present invention makes it possible to solve the problem (flow mark formation) due to the blending of the elastomer, while obtaining the effect (improvement in impact strength of a formed article) of the blending of the elastomer.

The elastomer used in the present invention is preferably particulate. The amount of the particulate elastomer is easily determined during the melt kneading, and the particulate elastomer is excellent in miscibility with the polycarbonate resin.

When the particulate elastomer is used, the primary particle size of elastomer particles is preferably 0.1 to 0.5 µm, and more preferably 0. 3 to 0. 5 µm. When the primary particle size is 0.1 to 0.5 µm, the amount of the particulate elastomer is easily determined with an electrically-powered feeder during melt kneading, causing no variations in its content in the resin composition. The primary particle size can be determined according to JIS Z8825.

Elastomers having the above-described physical properties are known substance, and are readily available on the market, or can be prepared. For example, CHALINE R-170S (silicone rubber content: 70 % by mass; acrylic resin content: 30% by mass) manufactured by Nissin Chemical Industry Co., Ltd can be used.

The mass ratio (the elastomer/the glass fibers) between the elastomer and the glass fibers is 0.10 to 0.30, preferably 0.10 to 0.25, and more preferably 0.15 to 0.25. When the mass ratio between the elastomer and the glass fibers is 0.10 to 0.30, it is possible to obtain a formed article excellent in appearance, while obtaining the effect (improvement in rigidity of a formed article (especially, bending strength)) of the blending of the glass fibers and the effect (improvement in impact strength of the formed article) of the blending of the elastomer.

The polycarbonate resin composition of the present invention (hereinafter, also referred to as "the resin composition of the present invention") can be blended with well-known additives serving as optional components, within a range not impairing the stated effects or characteristics of the present invention. For example, when the resin composition of the present invention is blended with an antioxidant, it is possible to suppress decomposition of the polycarbonate resin during the production or forming of the resin composition.

The resin composition of the present invention can be produced by using a conventional method known as a method for producing a polycarbonate resin composition, without any particular limitation. A preferred example of the production method may be a method in which the polycarbonate resin, the glass fibers subjected to a surface treatment with the sizing agent, the elastomer, and the optional components are mixed with each other in a mixer or the like, melt kneaded in an extruder, and pelletized.

The production conditions can be set, as appropriate, and are not particularly limited. Preferably, the heating temperature during melt kneading is in the range of 220°C to 300°C, because the decomposition of the polycarbonate resin can be suppressed.

The resin composition of the present invention can be subjected to a conventional method known as a method for forming a formed polycarbonate article, without any particular limitation, to obtain a formed article. Examples of the forming method include an injection molding method, an extrusion molding method, a compression molding method, a calender forming method, and the like.

Of these methods, the resin composition of the present invention can be used preferably in an injection molding method.

Forming conditions can be set, as appropriate, and are not particularly limited. Preferably, the resin temperature during forming is in the range of 220°C to 300°C, because decomposition of the polycarbonate resin can be suppressed.

The thickness of a formed article (or an article) obtained by forming the resin composition of the present invention (hereinafter, also referred to as "formed article (or article) of the present invention") is not particularly limited, and can be set, as appropriate, according to the purpose of use of the formed article. The thickness is preferably 0.3 to 5 mm, and more preferably 1 to 3 mm. When the thickness of a formed article is 0.3 to 5 mm, the obtained formed article can be light in weight and excellent in strength.

The bending modulus (one of the rigidity indices) of the formed article of the present invention is preferably 2.5 to 4.5 GPa, and more preferably 3.0 to 4.5 GPa. When the bending modulus is 2.5 to 4.5 GPa, the formed article can be used suitably for applications where a high strength is required. The bending modulus can be determined according to JIS K7171.

The impact strength of the formed article of the present invention, as determined by the Charpy impact test with V notch, is preferably 9 to 15 KJ/m², and more preferably 10 to 15 KJ/m². When the Charpy impact strength with V notch is 9 to 15 KJ/m², the formed article can be used suitably for applications where a high strength is required. The impact strength can be determined according to JIS K7111.

The bending strength (one of the rigidity indices) of the formed article of the present invention is preferably 90 to 105 MPa, and more preferably 95 to 105 MPa. When the bending strength is 90 to 105 MPa, the formed article can be used suitably for applications where a high strength is required. The bending strength can be determined according to JIS K7171.

The mass-average surface roughness (Rz) of the formed article of the present invention is preferably 0.20 to 0.80 µm, and more preferably 0.20 to 0.75 µm. The surface roughness is an index of the appearance of a formed article, and a lower value represents a better appearance. Accordingly, when the mass-average surface roughness is 0.20 to 0.80 µm, the formed article can be used suitably for applications where an excellent appearance is required. The surface roughness can be determined according to JIS B0601.

The formed article of the present invention can be used for similar applications to those of conventionally known formed polycarbonate resin articles, without any particular limitation. Preferably, the formed article can be applied to a portion where the inside of the applied article has to be recognized, for example, an outer plate, a housing, an opening member, or the like. Specific examples include those described in the following (1) to (6).
(1) Components for electrical devices, such as various components, outer plates, and housings of televisions, radio-cassette recorders, video cameras, video tape recorders, audio players, DVD players, telephones, displays, computers, registers, copiers, printers, facsimiles, and the like.
(2) Components for high precision machines, such as cases and covers of high precision machines such as mobile phones, PDAs, cameras, slide projectors, timepieces, electronic calculators, measuring equipment, and display devices.
(3) Automotive components, such as those of sunroofs, door visors, rear windows, and side windows.
(4) Components for architectural applications, such as glass for architectural applications, and components of soundproof walls, carports, sunrooms, gratings, and the like.
(5) Components for agricultural applications, such as those of plastic greenhouse, glasshouse, and the like
(6) Components for furniture such as lighting covers, window shade, and interior goods.

### [Examples]

Next, effects of the present invention are described specifically based on , Examples.

### (Example 1)

A mixture was obtained by mixing 90.0 parts by mass of a bisphenol A polycarbonate resin (powdery, viscosity-average molecular weight: 19,000 (measured according to JIS K7252)) with 3.0 parts by mass of a particulate acrylic resin-grafted dimethyl polysiloxane rubber (the degree of polymerization of the dimethyl polysiloxane: 50,000; the acrylic resin was a polymethyl methacrylate having a degree of polymerization of 5,000; the acrylic resin content relative to the total mass of the acrylic resin-grafted dimethyl polysiloxane rubber (elastomer): 30% by mass).

The obtained mixture was introduced through a first supply port of a twin-screw melt kneading extruder having two raw material inlet ports into the extruder.

Next, 10.0 parts by mass of chopped strand-shaped glass fibers (E glass fibers subjected to a surface treatment with a bisphenol A-type epoxy resin which was solid at 25°C and had an epoxy equivalent weight of 875 g/eq (measured according to JIS K7236) ; the fiber length before kneading was 3 mm, the fiber diameter was 13 µm, and the number of glass fibers bundled was 1100) was introduced through the second inlet port into the extruder by using an electrically-powered feeder, and melt kneaded at a temperature of 280°C to obtain a polycarbonate resin composition.

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.30.

### (Example 2)

A polycarbonate resin composition was obtained by the same method as in Example 1, except that the amount of the acrylic resin-grafted dimethyl polysiloxane blended was changed to 1.0 parts by mass.

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.10.

### (Example 3)

A polycarbonate resin composition was obtained by the same method as in Example 1, except that the amount of the bisphenol A polycarbonate resin blended was changed to 95.0 parts by mass, and the amount of the acrylic resin-grafted dimethyl polysiloxane rubber blended was changed to 1.5 parts by mass, and the amount of the chopped strand-shaped glass fibers introduced was changed to 5.0 parts by mass.

In the polycarbonate resin composition, the mass ratio between the polycarbonate resin and the glass fibers (the polycarbonate resin:the glass fibers) was 95:5, and the mass ratio between the elastomer and the glass fibers (the elastomer/the glass fibers) was 0.30.

### (Example 4)

A mixture was obtained by mixing 90.0 parts by mass of a bisphenol A polycarbonate resin (powdery, viscosity-average molecular weight: 19,000 (measured according to JIS K7252)), 2.5 parts by mass of the acrylic resin-grafted dimethyl polysiloxane rubber used in Example 1, and 10.0 parts by mass of milled fiber-shaped glass fibers (E glass fibers subjected to a surface treatment with a bisphenol A-type epoxy resin which was solid at 25°C and had an epoxy equivalent weight of 3600 g/eq (measured according to JIS K7236) ; the average fiber length before kneading was 210 µm, and the fiber diameter was 7 µm) .

The obtained mixture was introduced through the first supply port of the twin-screw melt kneading extruder used in Example 1 into the extruder.

Next, a polycarbonate resin composition was obtained by melt kneading at a temperature of 280°C.

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.25.

### (Example 5)

A polycarbonate resin composition was obtained by the same method as in Example 4, except that the amount of the bisphenol A polycarbonate resin blended was changed to 80.0 parts by mass, the amount of the acrylic resin-grafted dimethyl polysiloxane rubber blended was changed to 2.0 parts by mass, and the amount of the milled fiber-shaped glass fiber blended was changed to 20.0 parts by mass.

In the polycarbonate resin composition, the mass ratio between the polycarbonate resin and the glass fibers (the polycarbonate resin:the glass fibers) was 80:20, and the mass ratio between the elastomer and the glass fibers (the elastomer/the glass fibers) was 0.10.

### (Comparative Example 1)

A polycarbonate resin composition was obtained by the same method as in Example 1, except that the acrylic resin-grafted dimethyl polysiloxane rubber was not added.

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.0.

### (Comparative Example 2)

A polycarbonate resin composition was obtained by the same method as in Example 1, except that the amount of the acrylic resin-grafted dimethyl polysiloxane rubber blended was changed to 5.0 parts by mass.

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.50.

### (Comparative Example 3)

A polycarbonate resin composition was obtained by the same method as in Example 4, except that the acrylic resin-grafted dimethyl polysiloxane rubber was changed to a dimethyl polysiloxane rubber (degree of polymerization 100000) "onto which no acrylic resin was grafted."

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.25.

### (Comparative Example 4)

A polycarbonate resin composition was obtained by the same method as in Example 4, except that the amount of the acrylic resin-grafted dimethyl polysiloxane rubber added was changed to 0.5 parts by mass.

In the polycarbonate resin composition, the mass ratio between the polycarbonate resin and the glass fibers (the polycarbonate resin:the glass fibers) was 90:10, and the mass ratio between the elastomer and the glass fibers (the elastomer/the glass fibers) was 0.05.

### (Comparative Example 5)

A polycarbonate resin composition was obtained by the same method as in Example 5, except that the acrylic resin-grafted dimethyl polysiloxane rubber was not added.

In the polycarbonate resin composition, the mass ratio between the polycarbonate resin and the glass fibers (the polycarbonate resin:the glass fibers) was 80:20, and the mass ratio between the elastomer and the glass fibers (the elastomer/the glass fibers) was 0.0.

### (Measurement of Fiber Diameter and Fiber Length of Glass Fibers)

The resin components in each of the polycarbonate resin compositions of Examples 1 to 5 and Comparative Examples 1 to 5 were combusted in an electric furnace at 550°C to take out the glass fibers. From 200-fold magnified images of the obtained glass fibers, 200 test piece were extracted at random, and the magnified glass fiber images were measured by using a ruler, and the average fiber diameter and the mass-average fiber length of the glass fibers were calculated.

### (Fabrication of Formed Articles)

The polycarbonate resin compositions of Examples 1 to 5 and Comparative Examples 1 to 5 were injection molded at a resin-melting temperature of 280°C and a mold temperature of 120°C by using an injection molding machine to obtain formed articles. The formed articles were subjected to the following evaluations.

### (Measurement of Surface Roughness)

The depths and heights of fine concavities and convexities on the surfaces of 150-mm square injection-molded articles having a thickness of 3 mm were measured according to JIS B0601 by using a surface roughness tester SE300-39 manufactured by Kosaka Laboratory Ltd. Based on the measured values, the mass-average surface roughness was calculated.

### (Measurement of Bending Strength)

The measurement was conducted according to JIS K7171.

### (Measurement of Bending Modulus)

The measurement was conducted according to JIS K7171.

### (Measurement of Charpy Impact Strength)

The measurement was conducted according to JIS K7111.

| | Example 1 | Example 2 | Example 3 | Example 4 | Example 5 |
|---|---|---|---|---|---|
| Glass content relative to total mass of resin composition (% by mass) | 9.7 | 9.9 | 4.9 | 9.75 | 19.1 |
| Mass-average fiber diameter of glass fibers (µm) | 13 | 13 | 13 | 7 | 7 |
| Mass-average fiber length of glass fibers (µm) | 275 | 283 | 287 | 137 | 120 |
| Bending strength of formed article (MPa) | 95.2 | 96.8 | 93.4 | 97.6 | 103.1 |
| Bending modulus of formed article (GPa) | 3.2 | 3.2 | 2.1 | 3.2 | 4.4 |
| Charpy impact strength of formed article, with V notch (KJ/m²) | 12.8 | 11.2 | 14.2 | 11.4 | 10.3 |
| Mass-average surface roughness RZ of formed article (µm) | 0.619 | 0.717 | 0.255 | 0.503 | 0.749 |

| | Comp. Ex. 1 | Comp. Ex. 2 | Comp. Ex. 3 | Comp. Ex. 4 | Comp. Ex. 5 |
|---|---|---|---|---|---|
| Content ratio of glass (%) | 10.0 | 9.5 | 9.75 | 9.95 | 20.0 |
| Average fiber diameter of glass fibers (µm) | 13 | 13 | 7 | 7 | 7 |
| Mass-average fiber length of glass fiber (µm) | 291 | 287 | 135 | 138 | 116 |
| Bending strength of formed article (MPa) | 96.0 | 84.0 | 87.5 | 95.7 | 106.3 |
| Bending modulus of formed article (GPa) | 3.2 | 2.9 | 3.0 | 3.2 | 4.3 |
| Charpy impact strength of formed article, with V notch (KJ/m²) | 4.7 | 12.2 | 14.5 | 8.4 | 3.6 |
| Mass-average surface roughness RZ of formed article (µm) | 1.567 | 0.402 | 1.475 | 1.044 | 1.926 |

Example 1 and Comparative Example 1 are different in the presence or absence of the acrylic resin-grafted dimethyl polysiloxane rubber (elastomer) used.

The formed article of Example 1 in which the elastomer was used was remarkably superior in impact strength and appearance (surface roughness) to the formed article of Comparative Example 1 in which the elastomer was not used.

Similar results were also obtained by a comparison between Example 5 and Comparative Example 5.

Example 1 and Comparative Example 2 are different in the mass ratio between the elastomer and the glass fibers (the elastomer/the glass fibers).

The formed article of Comparative Example 2 having a mass ratio (0.50) which was out of the range (0.10 to 0.30) of the mass ratio between the elastomer and the glass fibers specified in the present invention was inferior in bending strength, which is an index of "rigidity," to the formed article of Example 1.

Example 4 and Comparative Example 3 are different in the presence or absence of the grafting in the elastomer.

The formed article of Example 4 in which the acrylic resin-grafted elastomer was used was remarkably superior in appearance to the formed article of Comparative Example 3 in which the ungrafted elastomer was used.

Example 4 and Comparative Example 4 are different in the mass ratio between the elastomer and the glass fibers.

The formed article of Comparative Example 4 having a mass ratio (0.05) which was out of the range (0.10 to 0.30) of the mass ratio between the elastomer and the glass fibers specified in the present invention was inferior in impact strength and appearance to the formed article of Example 1.

### Industrial Applicability

The polycarbonate resin composition of the present invention can be used in various industrial fields.

## Claims

1. A polycarbonate resin composition, consisting of:
a polycarbonate resin;
glass fibers subjected to a surface treatment with a sizing agent; and
an elastomer, wherein
the glass fibers have a mass-average fiber diameter of 4 to 15 µm and a mass-average fiber length of 60 to 350 µm,
the elastomer is a dimethyl polysiloxane rubber onto which an acrylic resin is grafted,
the mass ratio between the polycarbonate resin and the glass fibers (the polycarbonate resin:the glass fibers) is 80 to 95:5 to 20, and
the mass ratio between the elastomer and the glass fibers (the elastomer/the glass fibers) is 0.10 to 0.30.

2. The polycarbonate resin composition according to claim 1, wherein
the sizing agent is a bisphenol A-type epoxy resin.

3. The polycarbonate resin composition according to claim 2, wherein
the bisphenol A-type epoxy resin has an epoxy equivalent weight of 450 to 5000 g/eq.

4. The polycarbonate resin composition according to any one of claims 1 to 3, wherein
the elastomer comprises the acrylic resin at a ratio of 10 to 40% by mass relative to the total mass of the elastomer.

5. The polycarbonate resin composition according to any one of claims 1 to 4, wherein
the elastomer is particulate, and has a primary particle size of 0.1 to 0.5 µm.

6. The polycarbonate resin composition according to any one of claims 1 to 5, which is a resin composition for injection molding.

7. An article obtained by forming the polycarbonate resin composition according to any one of claims 1 to 6.

8. The article according to claim 7, which is an injection-molded article.

## Patentansprüche

1. Polycarbonatharzzusammensetzung, bestehend aus:
einem Polycarbonatharz;
Glasfasern, die einer Oberflächenbehandlung mit einem Schlichtemittel unterzogen wurden; und
einem Elastomer, wobei
die Glasfasern einen massengemittelten Faserdurchmesser von 4 bis 15 µm und eine massengemittelte Faserlänge von 60 bis 350 µm aufweisen,
das Elastomer ein Dimethylpolysiloxan-Kautschuk ist, auf den ein Acrylharz gepfropft ist,
das Massenverhältnis zwischen dem Polycarbonatharz und den Glasfasern (Polycarbonatharz:Glasfasern) 80 bis 95:5 bis 20 beträgt, und
das Massenverhältnis zwischen dem Elastomer und den Glasfasern (Elastomer/Glasfasern) 0,10 bis 0,30 beträgt.

2. Polycarbonatharzzusammensetzung nach Anspruch 1, wobei
das Schlichtemittel ein Epoxidharz vom Bisphenol A-Typ ist.

3. Polycarbonatharzzusammensetzung nach Anspruch 2, wobei
das Epoxidharz vom Bisphenol A-Typ ein Epoxidäquivalentgewicht von 450 bis 5000 g/Äquiv. aufweist.

4. Polycarbonatharzzusammensetzung nach einem der Ansprüche 1 bis 3, wobei
das Elastomer das Acrylharz in einem Anteil von 10 bis 40 Masse% bezüglich der Gesamtmasse des Elastomers umfasst.

5. Polycarbonatharzzusammensetzung nach einem der Ansprüche 1 bis 4, wobei
das Elastomer partikelförmig ist, und eine Primärpartikelgröße von 0,1 bis 0,5 µm aufweist.

6. Polycarbonatharzzusammensetzung nach einem der Ansprüche 1 bis 5, die eine Harzzusammensetzung zum Spritzgießen ist.

7. Gegenstand, erhalten durch Formen der Polycarbonatharzzusammensetzung nach einem der Ansprüche 1 bis 6.

8. Gegenstand nach Anspruch 7, der ein spritzgegossener Gegenstand ist.

## Revendications

1. Composition de résine de polycarbonate, consistant en :
une résine de polycarbonate ;
des fibres de verre soumises à un traitement de surface avec un agent d'encollage ; et
un élastomère, dans laquelle
les fibres de verre ont un diamètre de fibre moyen en masse de 4 à 15 µm et une longueur de fibre moyenne en masse de 60 à 350 µm,
l'élastomère est un caoutchouc de diméthyl-polysiloxane sur lequel une résine acrylique est greffée,
le rapport en masse entre la résine de polycarbonate et les fibres de verre (résine de polycarbonate:fibres de verre) est de 80 à 95:5 à 20, et
le rapport en masse entre l'élastomère et les fibres de verre (élastomère/fibres de verre) est de 0,10 à 0,30.

2. Composition de résine de polycarbonate selon la revendication 1, dans laquelle
l'agent de d'encollage est une résine époxy de type bisphénol A.

3. Composition de résine de polycarbonate selon la revendication 2, dans laquelle
la résine époxy de type bisphénol A a un poids équivalent d'époxy de 450 à 5 000 g/eq.

4. Composition de résine de polycarbonate selon l'une quelconque des revendications 1 à 3, dans laquelle
l'élastomère comprend la résine acrylique dans un rapport de 10 à 40 % en masse par rapport à la masse totale de l'élastomère.

5. Composition de résine de polycarbonate selon l'une quelconque des revendications 1 à 4, dans laquelle
l'élastomère est en particules et a une dimension particulaire primaire de 0,1 à 0,5 µm.

6. Composition de résine de polycarbonate selon l'une quelconque des revendications 1 à 5, qui est une composition de résine pour le moulage par injection.

7. Article obtenu par la formation d'une composition de résine de polycarbonate selon l'une quelconque des revendications 1 à 6.

8. Article selon la revendication 7, qui est un article moulé par injection.
